# EUROPÄISCHE PATENTSCHRIFT

(11) **EP 3 382 250 B1**
(45) Veröffentlichungstag und Bekanntmachung des Hinweises auf die Patenterteilung: **09.11.2022**
(21) Anmeldenummer: 18165716.4
(22) Anmeldetag: 09.09.2010
(51) Int. Cl.: F16L 5/10

(54) **VERFAHREN ZUR HERSTELLUNG EINER DICHTUNGSMANSCHETTE**
PRODUCTION METHOD OF A SEALING COLLAR
MÉTHODE DE FABRICATION D'UN MANCHON D'ÉTANCHÉITÉ

(30) Priorität: 28.04.2010 DE 102010018677
(43) Veröffentlichungstag der Anmeldung: 03.10.2018
(62) Teilanmeldung aus: 10778833.3
(73) Patentinhaber: Watermann Polyworks GmbH, 32758 Detmold (DE)
(72) Erfinder: Watermann, Markus, 32760 Detmold (DE)
(74) Vertreter: Freischem & Partner Patentanwälte mbB

(56) Entgegenhaltungen:
- EP-A2- 0 794 375
- EP-A2- 1 013 508
- WO-A1-98/39591
- DE-U1- 29 822 257
- US-A- 3 870 084

## Beschreibung

### Beschreibung

Die Erfindung betrifft ein Verfahren zur Herstellung einer elastischen Dichtungsmanschette für ein Abdichten des Übergangs von einer Wand auf ein der Wand vorstehendes Rohr oder dergleichen, aufweisend eine zentrale Durchbrechung, deren Größe kleiner bemessen ist als der Querschnitt des Rohres.

Dichtungsmanschetten der voranstehend genannten Art sind in vielfältigen Ausführungsformen bekannt und bewährt. Zumeist finden sie in einem Nassbereich einer Wohnung wie beispielsweise einem Bad, einer Dusche etc. Verwendung und dichten zumeist ein Wasserrohr gegen eine Wand ab, die über die Dichtungsmanschette hinweg beispielsweise mit Fliesen belegt ist.

Aus der DE 298 22 257 U1 ist eine solche Dichtungsmanschette bekannt.

Aus der DE 41 31 637 A1 ist eine weitere solche elastische Dichtungsmanschette bekannt, die sowohl an einer aufgehenden Wand gut verhaftet als auch einem Belag wie Fliesen einen guten Halt bieten kann. Damit soll eine sichere Abdichtung zwischen Rohr und Mauerwerk geschaffen werden. Hierzu ist die aus einem elastischen Material bestehende Dichtungsmanschette zumindest einseitig mit einer offenporigen oder faserigen Deckschicht versehen, die einen ringförmigen Bereich um die Durchbrechung frei belässt, um die Flexibilität des Bereichs nicht zu beeinträchtigen und eine sichere Anlage dieses flexiblen Mittelteils an das Rohr sicherzustellen. Dies erfordert einen erheblichen Aufwand bei der Herstellung.

Daneben tragen diese bekannten Dichtungsmanschetten aufgrund des Verbundes vergleichsweise stark auf, um die Abdichtung des Übergangs von der Wand auf ein der Wand vorstehendes Rohr dauerhaft zu gewährleisten. Um diesem Problem zu begegnen, ist bekannt, als Trägermaterial eine relativ dünne PVC-Folie zu verwenden, die sich jedoch in neueren Prüfverfahren als ungeeignet erwiesen hat, da PVC nicht alkalibeständig ist, sondern unter alkalischem Einfluss sehr schnell versprödet, womit eine Dichtfunktion nicht mehr gewährleistet ist.

Als problematisch hat es sich bei der Herstellung der bekannten Dichtungsmanschetten ferner erwiesen, diese auf der der Wand zugewandten Seite selbstklebend zu beschichten. Häufig überdeckt eine solche Kleberbeschichtung auch das flexible Mittelteil, so dass eine derartige Dichtungsmanschette kaum mehr zu verwenden ist, da die Manschetten bei einem Anbringen bereits an dem Rohr, einem Baustopfen oder dergleichen verklebt und nicht an der Wand.

Darüber hinaus weisen die bekannten Dichtungsmanschetten das grundsätzliche Problem auf, dass es bei einem Überstülpen über ein Rohr und einem Anlegen an die Wand zu einer Verformung der gesamte Dichtungsmanschette kommt, womit diese häufig nicht mehr plan und eben an eine Wand angelegt werden kann.

Um diese Problematik zu überwinden, wird nach der Erfindung gemäß dem Verfahren des Anspruchs 1 bei einer Dichtungsmanschette für ein Abdichten des Übergangs von einer Wand auf ein der Wand vorstehendes Rohr oder dergleichen, aufweisend eine zentrale Durchbrechung, deren Größe kleiner bemessen ist als der Querschnitt des Rohres, darauf abgestellt, dass ein gesondert ausgebildetes, elastisches Mittelteil vorgesehen und dass an das Mittelteil randseitig eine Wandauflage angefügt ist.

Eine solche Dichtungsmanschette bietet eine Vielzahl von Vorteilen gegenüber den herkömmlichen.

Zunächst bietet die Dichtungsmanschette nach der Erfindung die Möglichkeit, durch eine spezielle Materialwahl für das Mittelteil und die Wandauflage deren Funktion jeweils zu optimieren. Hierbei wird das Mittelteil aus einem besonders elastischen Kunststoff bestehen, während die Wandauflage durch ein vergleichsweise steifes, jedoch leicht mit einem Kleber, einem Mörtel oder dergleichen verhaftbares Material ausgebildet ist. Insbesondere kann dabei vorgesehen sein, dass die Wandauflage ein Vlies ist, beispielsweise ein PP-Spinnvlies, wie es für die Abdichtung von Wänden regelmäßig verwendet wird. Dabei stellt es kein Problem dar, dieses Vlies folienkaschiert auszubilden, beispielsweise auch selbstklebend, ohne dass das flexible Mittelteil hiervon in Leidenschaft gezogen wird.

Es kann vorgesehen sein, dass das Mittelteil aus einem sehr elastischen Material, beispielsweise einem TPE, passgenau in eine Öffnung der Wandauflage eingesetzt ist oder, alternativ, dass das Mittelteil und die Wandauflage überlappen.

Abhängig von diesen konstruktiven Ausgestaltungen und den verwendeten Materialen können das Mittelteil und die Wandauflage durch nahezu alle gängigen Fügeverfahren wie Ultraschallschweißen, Mikrowellenschweißen oder andere thermische Verfahren, gegebenenfalls auch durch geeignete Klebstoffe verbunden werden. Nach der Erfindung werden sie durch Ultraschweißen zusammengefügt.

Unabhängig davon, ob die Wandauflage ein Verbundwerkstoff, ein Komposit aus Vliesstoffen und Folien ist, hat es sich als zweckmäßig erwiesen, wenn auf der überlappten Flachseite der Wandauflage ein Vlies aufkaschiert ist. Es kann dieses Vlies, sofern der überlappte Bereich ausgespart ist, einen Höhenausgleich darstellen oder, wenn der überlappte Bereich oder gegebenenfalls das gesamte Mittelteil mit Ausnahme der zentralen Durchbrechung von einem solchen Vlies überdeckt wird, einer sehr guten Verhaftung mit einem Kleber, einem Mörtel oder dergleichen dienlich sein.

Unabhängig hiervon ist weiter vorgesehen, dass das Elastizitätsmodul der Wandauflage größer bemessen ist als das des Mittelteils. Dies erlaubt, bei geeigneter Materialwahl, zum einen eine optimale Anlage des elastischen Mittelteils an dem Rohr als auch zum anderen eine optimale Anlage der Wandauflage an einer Wand.

Für eine weitere Optimierung der Anlage an der Wand, gegebenenfalls auch unter einer gewissen Verspannung der Wandauflage, kann ferner vorgesehen sein, dass die Wandauflage randseitig umlaufend, außenrandseitig wie innenrandseitig, entlang der Öffnung, mit einer Lochung versehen ist, wobei vorzugsweise zwei parallele Reihen von Löchern vorgesehen werden, die auf Lücke gesetzt sind. Gegebenenfalls können die Löcher noch durch eine Randverstärkung oder einen aufgebrachten Streifen gegen ein Ausreißen verstärkt sein. Alternativ sind Perforationen möglich, gegebenenfalls auch über die gesamte Fläche der Wandauflage, so dass eine gewisse Dampfdurchlässigkeit ermöglicht ist, die darüber hinaus durch den Grad der Perforation einstellbar ist. Weitere Alternative stellen randseitige Ein- und Ausschnitte dar, durch die vorstehende Lappen in vielfältigen Formen ausgebildet werden können.

Dem Voranstehenden vergleichbar kann für eine verbesserte Verhaftung der Wandauflage mit dem Mittelteil vorgesehen werden, dass die Öffnung in der Wandauflage oval, rund oder ein Polygonzug ist, der gegebenenfalls mit Einschnitten noch versehen sein kann.

Des Weiteren zeichnet sich die Dichtungsmanschette nach der Erfindung auch durch ein sehr einfaches Herstellungsverfahren aus.

Bei dem erfindungsgemäßen Verfahren zur Herstellung einer Dichtungsmanschette für ein Abdichten des Übergangs von einer Wand auf ein der Wand vorstehendes Rohr oder dergleichen, insbesondere wie eingangs erläutert, wird darauf abgestellt, dass ein Zuschnitt einer Wandauflage erfolgt, bei dem in die Wandauflage eine zentrale Öffnung eingebracht wird, deren Abmessungen größer bemessen sind als die Abmessungen des Rohres, dass ein Zuschnitt eines elastischen Mittelteils erfolgt, dessen Abmessungen gleich oder größer bemessen sind als die der zentralen Öffnung, und der mit einer zentralen Durchbrechung versehen wird, deren Abmessungen kleiner bemessen sind als die des Rohres, und dass passgenau oder unter Überlappung das Mittelteil und die Wandauflage zusammengefügt werden.

Ein Vorteil dieses Verfahrens ist die Möglichkeit, den Zuschnitt der Wandauflage und den Zuschnitt des elastischen Mittelteils voneinander zu entkoppeln. Dies erlaubt es, beispielsweise Reste aus anderen Herstellungsverfahren von Dichtungen oder dergleichen für die Herstellung der Dichtungsmanschette zu verwenden. Auch ist eine freie Farbwahl unproblematisch möglich, um einem Kunden Dichtungsmanschetten in spezieller, wiederkehrender Farbkombination zukommen zu lassen.

Bei einem alternativen und nicht im Schutzumfang der Ansprüche liegenden 2. Herstellungsverfahren einer Dichtungsmanschette, wird nach dem Zuschnitt einer Wandauflage, entsprechend dem voranstehend erläuterten Verfahren, in einer Spritzgussmaschine ein elastisches Mittelteil in die zentrale Öffnung eingebracht und angefügt, wobei es in einem Überlappungsbereich zu einem Aufschmelzen des elastischen Mittelteils und der Wandauflage kommen wird, im Übrigen jedoch das Werkzeug aufgrund einer Kühlung das übrige Material der Wandauflage unbeschadet belassen wird.

Dieses Verfahren bietet darüber hinaus die Möglichkeit, durch entsprechende Ausbildung des Werkzeuges verschiedene Oberflächen des Mittelteils mit beispielsweise Marken, Bestellnummern oder dergleichen zu gestalten. Auch ist es möglich, die Materialstärke des elastischen Mittelteils einzustellen. Darüber hinaus können solche Mittelteile geschaffen werden, die einseitig, gegebenenfalls auch beidseits mit den Flachseiten der Wandauflage überlappen.

Die Dichtungsmanschette und ihre Herstellung werden anhand der Zeichnungen näher erläutert, in der lediglich Ausführungsbeispiele schematisch dargestellt sind. In der Zeichnung zeigt:
- Fig. 1:: in einer Draufsicht eine Dichtungsmanschette mit einem passgenau eingebrachten Mittelteil,
- Fig. 2:: einen Schnitt gemäß der Linie II, II in Fig. 1,
- Fig. 3:: eine Draufsicht auf eine Dichtungsmanschette mit einem die Wandauflage überlappenden Mittelteil,
- Fig. 4:: einen Schnitt gemäß der Linie IV, IV in Fig. 3 und
- Fig. 5:: einen Schnitt durch ein weiteres Ausführungsbeispiel,
- Fig. 6:: eine Draufsicht auf eine Dichtungsmanschette, anhand der weitere Varianten beschrieben werden.

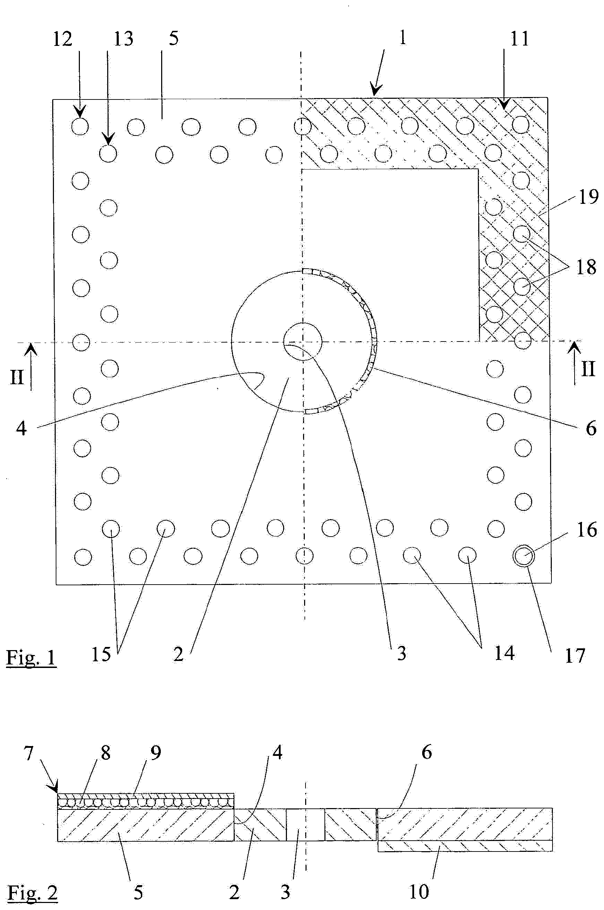

Die Fig. 1 zeigt in einer Draufsicht eine Dichtungsmanschette 1 nach der Erfindung etwa in natürlicher Größe. Ein zentrales, gesondert ausgebildetes Mittelteil 2 weist eine Durchbrechung 3 auf, hier von kreisringförmigem Querschnitt, deren Durchmesser geringer bemessen ist als der eines einer Wand vorstehenden Rohrs, so dass das Mittelteil 2 unter Spannung auf ein solches Rohr aufgebracht werden muss.

Entsprechend der Durchbrechung 3 ist auch das Mittelteil 2 von kreisringförmiger Gestalt. Andere Geometrien, beispielsweise für ein Rohr von quadratischem oder rechteckigem Querschnitt wie bspw. von einem Kabelkanal sind gleichfalls problemlos möglich.

Das elastische Mittelteil 2 ist in eine zentrale Öffnung 4 einer vergleichsweise steifen Wandauflage 5 passgenau einzubringen, Fig. 1 linke Bildhälfte, wobei der Durchmesser der Öffnung 4 größer bemessen ist als der des einer Wand vorstehenden Rohrs.

Das elastische Mittelteil 2, das ein kleineres Elastizitätsmodul als die Wandauflage 5 aufweist, wird mit diesem gemäß der Erfindung durch Ultraschweißen , aber könnte auch durch

Mikrowellenschweißen, einen aufgeheizten, ringförmigen Stempel, gegebenenfalls durch geeignete Klebstoffe oder ein anderes Fügeverfahren verbunden.

Alternativ besteht die Möglichkeit, einen Zuschnitt der Wandauflage 5 in eine Spritzgussmaschine einzubringen und dort das Mittelteil 2 gesondert auszubilden. Wird dabei ein geringfügig von der Öffnung 4 abgesetzter Bereich der Wandauflage 5 gekühlt, kommt es, wie auch bei anderen Füge- oder Klebeverfahren zu einem Nahtbereich 6, rechte Bildhälfte in Fig. 1. Die Wandauflage 5 ist als gesonderter Zuschnitt völlig unabhängig von dem elastischen Mittelteil 2 und kann deshalb beispielsweise als Vlies ausgebildet eine Kaschierung 7 aufweisen, beispielsweise eine Kleberschicht 8, die selbst noch mit einer Abdeckfolie 9 belegt ist, Fig. 2 linke Bildhälfte.

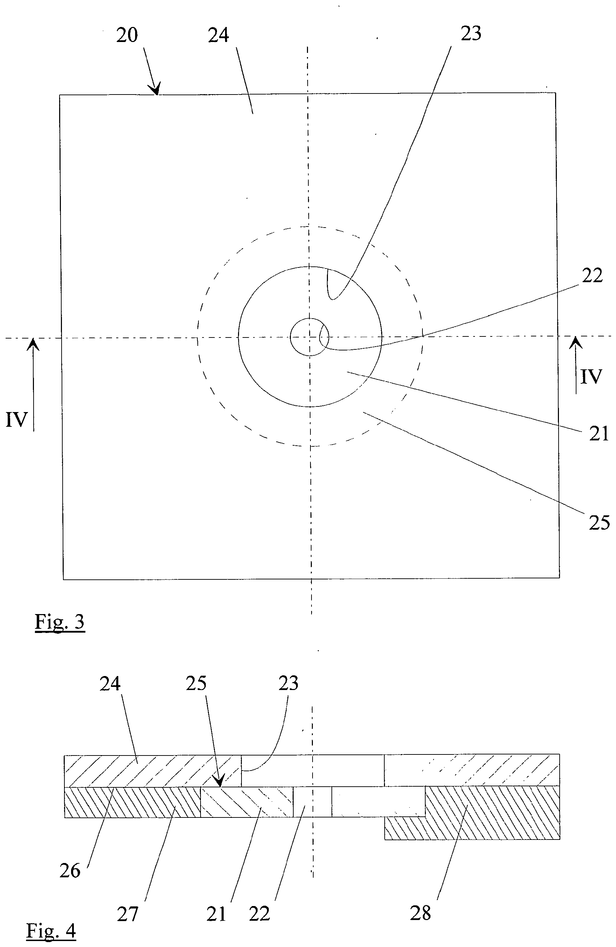

Ist die Wandauflage 5 beispielsweise durch eine vergleichsweise glatte Folie ausgebildet, so kann insbesondere wandseitig ein Vlies 10 aufkaschiert sein, Fig. 3 rechte Bildhälfte, so dass auch ein solches Komposit gut mit einer Wand verhaftet werden kann.

Alternativ, gegebenenfalls zusätzlich zu einer Selbstklebebeschichtung wie die aus Kleberschicht 8 und Abdeckfolie 9 bestehende Kaschierung 7 kann für eine plane Anlage der Wandauflage 5 an einer Wand oder dergleichen die Dichtungsmanschette 1 randseitig umlaufend mit einer Lochung 11 versehen sein, die hier aus zwei Reihen 12, 13 von Löchern 14, 15 besteht. Diese Löcher 14, 15 sind auf Lücke gesetzt, so dass bei einem Spannen und Festlegen der Dichtungsmanschette 1 mittels Heftzwecken, Nägeln, an einem Streckgitter oder dergleichen ein Ausreißen der Löcher 14, 15 nicht zu befürchten ist.

Gegebenenfalls kann ein Loch 16, in Fig. 1 lediglich angedeutet, mit einer Randverstärkung 17 durch bspw. Aufschmelzen oder dergleichen des Materials der Wandauflage 5 bei dem Einbringen des Lochs 16 noch versehen sein.

Eine Alternative zu einer solchen Randverstärkung eines einzelnen Lochs 16 ist im ersten Quadranten der Fig. 1 dargestellt, wo Löcher 18 durch einen auf die Wandauflage 5 aufgebrachten Streifen 19 verstärkt werden.

Bei dem Ausführungsbeispiel einer Dichtungsmanschette 20 gemäß den Fig. 3 und. 4 überlappen sich das elastische Mittelteil 21 mit zentraler Durchbrechung 22 und die Wandauflage 24. Entsprechend sind die Abmessungen des Mittelteils 21 größer zu bemessen als die einer Öffnung 23 in der Wandauflage 24. Auch hier stellen geeignete Füge- oder Klebeverfahren eine insbesondere zugfeste Verbindung zwischen dem Mittelteil 21 und der Wandauflage 24 her, wobei hierfür ein vergleichsweise großer Überlappungsbereich 25 zur Verfügung steht. Um die Höhendifferenz zwischen der überlappten Flachseite 26 der Wandauflage 24 und dem Überlappungsbereich 25 auszugleichen, kann die überlappte Flachseite 26 noch mit einem Vlies 27 belegt sein, vergleiche Fig. 4 linke Bildhälfte.

Ist der Überlappungsbereich 25 sehr groß, kann auch daran gedacht sein, für ein besseres Verhaften mit einem Kleber, einem Mörtel oder dergleichen ein Vlies 28 über das Mittelteil 21 hinweg aufzukaschieren, vorzugsweise bis hin zur Kontur der Öffnung 23, vergleiche Fig. 4, rechte Bildhälfte, gegebenenfalls jedoch auch bis hin zu der Durchbrechung 22 .

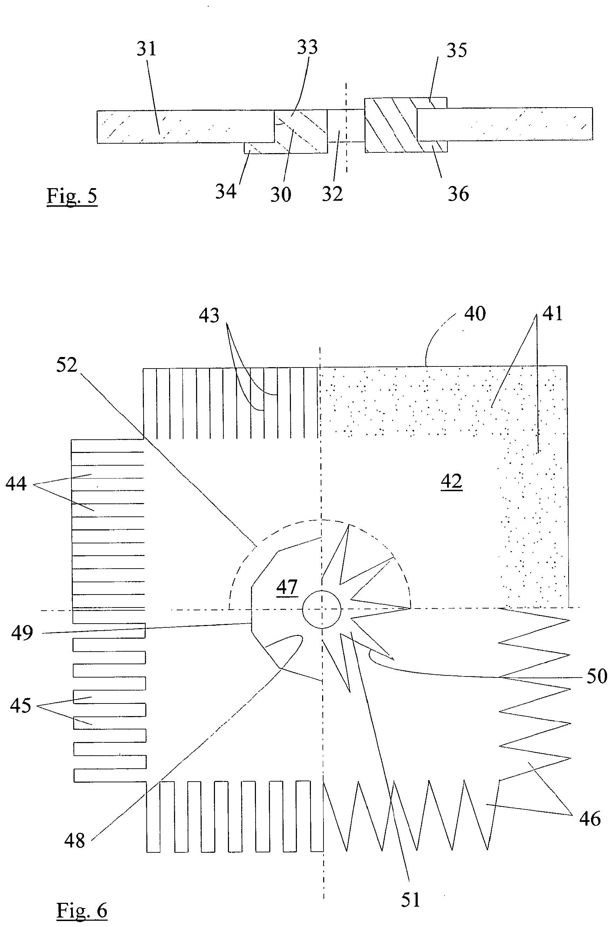

Das Erstellen eines flexiblen Mittelteils 30 gem. Fig. 5 in einer Spritzgussmaschine bei eingelegter Wandauflage 31 bietet in vorteilhafter Weise eine Kombination aus einem passgenauen Einbringen des mit einer zentralen Durchbrechung 32 versehen Mittelteils 30 in eine Öffnung 33 mit einer einseitigen Überlappung 34, Fig. 5 linke Bildhälfte, oder auch einer beidseitigen Überlappung 35, 36, Fig. 5 rechte Bildhälfte, so dass die Wandauflage 31 gleichsam von dem Mittelteil 30 eingefasst ist.

Darüber hinaus bietet das Einbringen des Mittelteils in einer Spritzgussmaschine die Möglichkeit, das Mittelteil durch entsprechende Auslegung des Werkzeugs mit Logos, Nummern oder dergleichen zu versehen.

Anhand der Figur 6 werden eine Vielzahl weiterer Varianten der Dichtungsmanschette nach der Erfindung erläutert, wobei die Randkontur 40 nicht auf die dargestellten quadratisch-rechteckigen Formen beschränkt ist. Rundovale oder Polygonzüge sind gleichfalls problemlos möglich. Um jedoch ein Verhaften der Dichtungsmanschette insbesondere randseitig zu verbessern, kann anstelle oder zusätzlich zu einer Lochung eine Perforation 41 in Form eines Randstreifens vorgesehen sein, in Figur 6 in der rechten oberen Bildhälfte angedeutet.

Eine solche Perforation 41 kann sich ggfls. auch über die gesamte Wandauflage 42 erstrecken, womit, in gewissem Umfang, eine derartig perforierte Dichtungsmanschette dampfdurchlässig ist.

Eine weitere Alternative für eine verbesserte, randseitige Verhaftung können einfache Einschnitte 43 sein, durch die eine Vielzahl unmittelbar nebeneinander liegender Lappen 44 ausgebildet werden, in Figur 6 in der linken oberen Bildhälfte dargestellt.

In der linken unteren Bildhälfte von Figur 6 sind vereinzelte, untereinander beabstandete Lappen 45 für eine verbesserte Randverhaftung dargestellt, in der rechten unteren Bildhälfte Lappen in Form von Zähnen 46.

In vergleichbarer Weise kann auch die Verhaftung zwischen einem Mittelteil 47 und der Wandauflage 42 verbessert werden, in dem eine Öffnung 48 durch einen Polygonzug 49 in Form eines Vielecks, in Figur 6 untere linke Bildhälfte, oder einen Polygonzug 50 in Sternform, Figur 6 untere rechte Bildhälfte, ausgebildet wird, in die passgenau die Mittelteile 47, 51 gemuntere Bildhälfte eingebracht werden können.

Alternativ ist ein Überlappen eines Mittelteils 52 auch bei derartigen Formen von Öffnungen 48 problemlos möglich, angedeutet in der oberen Bildhälfte der Figur 6.

Darüber hinaus sind vielfältige Kombinationsmöglichkeiten weiter gegeben, insbesondere in der Kombination von Lappen, Perforationen und Lochungen.

### Bezugszeichen liste

- 1: Dichtungsmanschette
- 2: Mittelteil
- 3: Durchbrechung
- 4: Öffnung
- 5: Wandauflage
- 6: Nahtbereich
- 7: Kaschierung
- 8: Kleberschickt
- 9: Abdeckfolie
- 10: Vlies
- 11: Lochung
- 12: Reihe
- 13: Reihe
- 14: Loch
- 15: Loch
- 16: Loch
- 17: Randverstärkung
- 18: Loch
- 19: Streifen
- 20: Dichtungsmanschette
- 21: Mittelteil
- 22: Durchbrechung
- 23: Öffnung
- 24: Wandauflage
- 25: Überlappungsbereich
- 26: Flachseite
- 27: Vlies
- 28: Vlies
- 29, 30: Mittelteil
- 31: Wandauflage
- 32: Durchbrechung
- 33: Öffnung
- 34: Überlappung
- 35: Überlappung
- 36: Überlappung
- 40: Randkontur
- 41: Perforation
- 42: Randauflage
- 43: Einschnitte
- 44-46: Lappen
- 47: Mittelteil
- 48: Öffnung
- 49, 50: Polygonzug
- 51: Mittelteil
- 52: Mittelteil

## Patentansprüche

1. Verfahren zur Herstellung einer Dichtungsmanschette für ein Abdichten des Übergangs von einer Wand auf ein der Wand vorstehendes Rohr oder dergleichen, wobei
- ein Zuschnitt einer Wandauflage (5) erfolgt
- bei dem in die Wandauflage (5) eine zentrale Öffnung (4) eingebracht wird, deren Abmessungen größer bemessen sind als die Abmessungen des Rohres,
- ein Zuschnitt eines elastischen Mittelteils (2) erfolgt, dessen Abmessungen gleich oder größer bemessen sind als die der zentralen Öffnung (4),
- und der mit einer zentralen Durchbrechung (3) versehen wird, deren Abmessungen kleiner bemessen sind als die des Rohres, und
- passgenau oder unter Überlappung das Mittelteil (2; 21) und die Wandauflage (5; 24) durch Ultraschallschweißen zusammengefügt werden.

2. Verfahren nach Anspruch 1, **dadurch gekennzeichnet**, **dadurch gekennzeichnet, dass** auf der überlappten Flachseite (26) der Wandauflage (24) ein Vlies (27) aufkaschiert ist.

3. Verfahren nach Anspruch 1 oder 2, **dadurch gekennzeichnet, dass** das Elastizitätsmodul der Wandauflage (5) größer bemessen ist als das des Mittelteils (2).

4. Verfahren nach einem oder mehreren der vorangehenden Ansprüche, **dadurch gekennzeichnet, dass** die Wandauflage ein Vlies oder ein Komposit aus einem Vlies und einer Folie ist.

5. Verfahren nach Anspruch 4, **dadurch gekennzeichnet, dass** das Vlies oder das Komposit mit einer Kaschierung (7) versehen ist.

6. Verfahren nach einem oder mehreren der vorangehenden Ansprüche, **dadurch gekennzeichnet, dass** die Wandauflage (5) randseitig umlaufend mit einer Lochung (11), einer Perforation (41), Lappen (44-46) und/oder Einschnitten (43) versehen ist.

7. Verfahren nach einem oder mehreren der vorangehenden Ansprüche, **dadurch gekennzeichnet, dass** die Öffnung (48) in der Wandauflage (42) oval, rund (4) oder ein Polygonzug (49, 50) ist.

## Claims

1. Method for producing a sealing collar for sealing the transition from a wall to a pipe or the like protruding from the wall, wherein
- a wall overlay (5) is cut to size
- in which a central opening (4) is incorporated in the wall overlay (5), the dimensions of which are larger than the dimensions of the pipe,
- an elastic central part (2) is cut, the dimensions of which are equal to or greater than those of the central opening (4),
- and which is provided with a central breakthrough (3), the dimensions of which are smaller than those of the pipe, and
- the central part (2; 21) and the wall overlay (5; 24) are joined together by ultrasonic welding with an accurate fit or by overlapping.

2. Method according to claim 1, **characterized in that** a nonwoven (27) is laminated onto the overlapped flat side (26) of the wall overlay (24).

3. Method according to claim 1 or 2, **characterized in that** the modulus of elasticity of the wall overlay (5) is dimensioned to be greater than that of the central part (2).

4. Method according to one or more of the preceding claims, **characterized in that** the wall overlay is a nonwoven or a composite of a nonwoven and a film.

5. Method according to claim 4, **characterized in that** the nonwoven or the composite is provided with a lamination (7).

6. Method according to one or more of the preceding claims, **characterized in that** the wall overlay (5) is provided circumferentially at the edge with a punching (11), a perforation (41), tabs (44-46) and/or incisions (43).

7. Method according to one or more of the preceding claims, **characterized in that** the opening (48) in the wall overlay (42) is oval, round (4) or a polygon (49, 50).

## Revendications

1. Procédé de fabrication d'un manchon d'étanchéité pour assurer l'étanchéité de la transition entre une paroi et un tuyau ou similaire faisant saillie sur la paroi, dans lequel
- une découpe d'un revêtement mural (5) est effectuée
- dans lequel on pratique dans le revêtement mural (5) une ouverture centrale (4) dont les dimensions sont supérieures aux dimensions du tuyau,
- une découpe d'une pièce centrale élastique (2) est effectuée, dont les dimensions sont égales ou supérieures à celles de l'ouverture centrale (4),
- et qui est pourvue d'une ouverture centrale (3) dont les dimensions sont inférieures à celles du tube, et
- la pièce centrale (2 ; 21) et le revêtement mural (5 ; 24) sont assemblés par soudage par ultrasons de manière précisément ajustée ou avec un chevauchement.

2. Procédé selon la revendication 1, **caractérisé en ce qu'**un non-tissé (27) est contrecollé sur la face plate (26) chevauchée du revêtement mural (24).

3. Procédé selon la revendication 1 ou 2, **caractérisé en ce que** le module d'élasticité du revêtement mural (5) est supérieur à celui de la pièce centrale (2).

4. Procédé selon une ou plusieurs des revendications précédentes, **caractérisé en ce que** le revêtement mural est un non-tissé ou un composite d'un non-tissé et d'un film.

5. Procédé selon la revendication 4, **caractérisé en ce que** le non-tissé ou le composite est pourvu d'un contrecollage (7).

6. Procédé selon une ou plusieurs des revendications précédentes, **caractérisé en ce que** le revêtement mural (5) est pourvu, sur son pourtour, de trous (11), d'une perforation (41), de languettes (44-46) et/ou d'incisions (43).

7. Procédé selon une ou plusieurs des revendications précédentes, **caractérisé en ce que** l'ouverture (48) dans le revêtement mural (42) est ovale, ronde (4) ou polygonale (49, 50).
